# EUROPÄISCHE PATENTSCHRIFT

(11) **EP 0 339 227 B1**
(45) Veröffentlichungstag und Bekanntmachung des Hinweises auf die Patenterteilung: **17.07.1996**
(21) Anmeldenummer: 89104417.4
(22) Anmeldetag: 13.03.1989
(51) Int. Cl.: D04B 1/00

(54) **Bauteil auf Gewirkebasis und Verfahren zu seiner Herstellung**
Construction element on a knitwear basis, and method for its manufacture
Elément de construction à base de tricot et procédé pour sa fabrication

(30) Priorität: 23.04.1988 DE 3813741
(43) Veröffentlichungstag der Anmeldung: 02.11.1989
(73) Patentinhaber: Vorwerk & Co. Interholding GmbH, D-42216 Wuppertal (DE); Daimler-Benz Aerospace Aktiengesellschaft, D-81663 München (DE)
(72) Erfinder: Böttger, Wolfgang, D-8651 Ködnitz (DE); Neupert, Alfred, D-8552 Stadtsteinach (DE)
(74) Vertreter: Müller, Enno, Dipl.-Ing.

(56) Entgegenhaltungen:
- EP-A- 0 243 105
- DE-A- 3 139 402
- US-A- 3 762 977

## Beschreibung

Die Erfindung bezieht sich auf ein Bauteil auf Gewirkebasis, und zwar auf Basis eines Abstandsgewirkes aus einem technischen Garn wie Aramidfaser, Kohlefaser, Keramikfaser oder insbesondere Glasfaser, mit mindestens einer ersten und einer zweiten Lage und diese Lagen verbindenden Zwischenstegen, welche aus frei flottierenden Fadenbrücken bestehen, sowie das zugehörige Herstellungsverfahren.

Ein Bauteil auf Gewirkebasis dieser Art ist durch die DE-OS 31 39 402 bekannt. Seine durch Wirken oder Nähen miteinander verbundenen Lagen sind an der Ober- und /oder Unterseite beschichtet, d.h. die die Lagen verbindenden, Beabstandungselemente bildenden Zwischenstege sind dem Bedürfnis nach noch biegbarem Material und dem einer guten Verformbarkeit dagegen belassen.

Durch die US-PS 34 81 427 ist es bekannt, ein webtechnisch erzeugtes Bauteil zu kammern. Dabei kommt Fiberglas zur Anwendung. Die Kammerung erreicht man im Hohlwebverfahren; es liegen also verbindende Stege in Form gewebter Wände vor. Das bringt beim Harzhärten aber gewisse Schwierigkeiten; der schlauchartige Gewebebau sackt leicht zusammen, wenn nicht besondere Distanzmittel zu seiner Abstützung eingesetzt werden. Man schiebt daher Stützkerne ein. Letzteres führt jedoch zu einer recht aufwendigen Fertigung.

Durch die EP-OS 0 243 105 ist es bekannt, ein Bauteil auf Gewirkebasis, und zwar auf Basis eines Abstandsgewirkes zu verharzen, um ein starres Element zu bilden. Das Gewirke ist schließlich in Art einer Armierung voll eingebettet, wobei Auslassungen frei flottierender Fadenbrücken definierte Soll-Faltstellen bilden, um das Abstandsgewirke besser in unterschiedliche Profilkörper falten zu können.

Andererseits haben gerade harzgehärtete Faserverbundstoffe sich ein weiteres Anwendungsfeld erobert, sei es in Form tragender Konstruktionselemente oder aber zur Erfüllung von Dämmaufgaben. Bei größtmöglicher Steifigkeit und Druckfestigkeit wird für spezielle Fälle, wie beispielsweise die Flugtechnik, auch noch ein möglichst niedriges Gewicht angestrebt.

Weiter sind für sich Bindungsarten wie Schußsamt und Kettsamt bekannt. Für besonders wirtschaftliche Fertigungsverfahren wird gleich doppellagig gearbeitet; es entsteht sogenannter Doppelsamt, bei welchem die Verbindungsstege schaffenden Polfäden zwischen den lagenbildenden Veloursfäden eine doppelte Fachbildung machen. Die Länge der flottierenden Fäden ist einstellbar, so daß größere oder kleinere Steglängen erzielt werden können. Auf einer Schneidbank erfolgt sodann der Mittenschnitt der Polfäden.

Aufgabe der Erfindung ist es, ein leichtes, mehrlagiges, praktisch sandwichartig aufgebautes Bauteil auf Gewirkebasis zu schaffen, bei dem die starre Beabstandungselemente bildenden Zwischenstege sich kraftvoll aufrichten sollen.

Gelöst ist diese Aufgabe durch die in den Ansprüchen 1 und 5 angegebene Erfindung.

Die weiteren Ansprüche verkörpern vorteilhafte Weiterbildungen.

Zufolge solcher Ausgestaltung ist ein gattungsgemäßes Bauteil hoher Biege- und Druckfestigkeit erreicht, welches auch im Hinblick auf den Faktor Gewicht gute Ergebnisse bringt. Der Abstand zwischen den Lagen wird nicht mehr von gewebten Wandungsabschnitten überbrückt; vielmehr ist so vorgegangen, daß das Abstandsgewirke ausgehärtet verharzt ist, wobei die Zwischenstege starre Beabstandungselemente der ersten Lage und zweiten Lage bilden, daß weiter die mittlere Länge der Zwischenstege größer ist als der Abstand zwischen den Lagen, dies derart, daß die Zwischenstege eingeregelt geschrägt verlaufen, wobei die eingeregelte Schrägung durch eine leichte Krümmung überlagert ist. Bedingt durch die Gewirkestruktur in Kombination mit den Eigenschaften solcher Materialien, haben die stegbildenden Stützen in noch vermehrtem Maße das Bestreben, sich kraftvoll aufzurichten. Sie stemmen dabei aus sich heraus die beiden Lagen, faßt in die kürzeste Strecklage tretend, voneinander ab. Hierbei läßt sich eine besonders im Wirkprozeß begründete Struktur nutzen, die Umlenkungen in den Verschlingungsbereichen unbeschadet toleriert. Gerade der Schlingenreichtum entsprechender Gewirke bietet so einen hoch flexiblen Übergangsbereich zwischen den Gewirkelagen und den Zwischenstegen. Das hat zudem den Vorteil einer hochgradigen Verformbarkeit (z.B. sphärische Krümmung), ohne die bei Flächenerzeugnissen sonst gravierend auftretenden Radialfaltungen zu bekommen. Es liegt soviel Fadenvorrat vor, daß eine verzerrungsfreie Verteilung auftritt. Die andererseits kraftspeicherartig vorliegende Rückstellkraft der Zwischenstege erspart jede Fremdabstützung; vielmehr wurde gefunden, daß Gewirke bei ausgehärteter Verharzung aus aus den vielen gleichmäßig verteilten, einzelnen freistehenden Zwischenstegen so stabile Beabstandungselemente schafft, daß sogar größte im Rahmen des Einsatzes zu erwartende Belastungen schadfrei aufgenommen werden können. Überdies ergibt sich eine überraschend hochgradige Schalldämm- bzw. Absorptionswirkung zufolge des hohen Hohlraumanteils solcher Bauteile. Entsprechend liegt eine auch heute durchaus wieder interessante Materialersparnis vor. Als vorteilhaft in der Praxis erweist sich dabei die erwähnte Gestaltungsmaßnahme dahingehend, daß die mittlere Länge der Zwischenstege größer ist als der Abstand zwischen den Lagen. Dadurch erhalten die Zwischenstege zumindest partiell eine mehr oder weniger steile Schrägstellung, wobei es sich als vorteilhaft erweist, daß die Zwischenstege eingeregelt schräg verlaufen. Hierdurch wird eine über die Breitfläche des Bauteils einfließende Belastung noch in eine gleichgerichtete Lagen-Verschiebekomponente umgesetzt. Das ist vor allem bei partiellen Hochbelastungen günstig, da der gesamte Körper dann in den Verformungswiderstand einbezogen ist. Die erwähnte Einregelung, d.h. Gleichrichtung der Stege macht die Ausweichbewegung zudem bestimmbar. Die Maßnahme, daß die eingeregelte Schrägung durch eine leichte Krümmung überlagert ist, bringt ein einfaches Mittel zur Optimierung der Flexibilität bei trotzdem hohem Standvermögen. Bei Belastung in der Zwischenstegachse kommt es folglich zu einem gegenseitige Reibungen vermeidenden Ausweichen. Eine optimale Lösung in dieser Beziehung besteht weiter darin, daß der Zwischensteg fortlaufend gleichsinnig gekrümmt ist. Die gleichsinnige Krümmung schafft gleichberechtigte Ausfederungszonen auf der gesamten Zwischensteglänge. Eine weitere Feinabstimmung kann noch darin bestehen, daß die sockelartigen Übergangsbereiche der Zwischenstege vertikal versetzt zueinander angeordnet sind. Die daraus gewonnene leichte Kipplage plus fortlaufender gleichsinniger Krümmung schafft eine vorteilhaft nutzbare Variante im Hinblick auf die angestrebte hohe Rückstellkraft des so gebildeten Armierungsgerüsts für das Bauteil. Um bei der entsprechenden Belastung der Stege ein Ausbauchen zu vermeiden, erweist es sich als vorteilhaft, daß die Zwischenstege aus schwach gedrillten Einzelstegen bestehen. Eine solche Stegschar schafft multiple lokale Federspeicher in hoher Stückzahl. Selbst größere Abstände zwischen den Lagen lassen sich ohne Stabilitätseinbuße so günstigst überbrücken. Die erwähnte schwache Drillung hält zudem die Einzel stege auch im Falle der Stegschar seitlich beabstandet. Ein vorteilhaftes Verfahren zur Herstellung des beschriebenen Bauteils durch Verharzen und nachfolgendes Aushärten des Gewirkes, wobei nach dem Verharzen des Gewirke eine Teilentfernung zur Ausbringung überschüssigen Harzes vorgenommen wird, besteht darin, daß unter Verwendung eines Abstandsgewirkes, welches Zwischenstege als starre Beabstandungselemente zwischen der ersten und der zweiten Lage bildet, das Entfernen von Harz in einem solchen Umfang erfolgt, daß die Rückstellkraft zwischen den Stegen freigegeben wird, so daß diese sich in eine eingeregelte schräge, die Schrägung überlagernde Krümmung aufrichten. Unter Wegfall der Auspreßkräfte stellen sich die harzgetränkten Beabstandungselemente spontan in ihre Ausgangsstellung zurück, in der sie nach dem Aushärten verbleiben.

Der Gegenstand der Erfindung ist nachstehend anhand eines zeichnerisch veranschaulichten Ausführungsbeispieles näher läutert. Es zeigt.
- Fig. 1: einen Abschnitt des erfindungsgemäß ausgebildeten Bauteils in Draufsicht,
- Fig. 2: die zugehörige Stirnansicht in Richtung A gesehen (vgl. Fig. 1),
- Fig. 3: eine entsprechende Stirnansicht, jedoch aus Richtung B (Fig. 1) gesehen mit etwa sphärisch ausgeformtem Mittelbereich des Bauteils,
- Fig. 4: einen vergrößerten Abschnitt gemäß Fig. 2,
- Fig. 5: einen vergrößerten Abschnitt gemäß Fig. 3 (beide Figuren weitestgehend schematisch dargestellt) und
- Fig. 6: eine Art Blockbild zur Verdeutlichung des Wölgungs- und Schrägungsverlaufs einer verdrillte Einzelstege bildenden Fadenschar als Zwischensteg.

Das dargestellte Bauteil 1 wird auf einer Wirkmaschine erzeugt. Es ist mehrlagig. Beim Ausführungsbeispiel handelt es sich um ein zweilagiges Gebilde. Eine erste, obere Lage trägt das Bezugszeichen 2; eine zweite, untere Lage ist mit 3 bezeichnet. Es wird übliche Wirktechnologie wie z. B. zur herstellung von Velours herangezogen.

Das so geschaffene Abstandgewirke berücksichtigt Stützfadenabschnitte in gleicher Verteilungsanordnung, welche Zwischenstege 4 bilden. Diese Zwischenstege 4 halten die Lagen 2, 3 verbindend auf Abstand zueinander. Es liegt ein der ungespaltenen Struktur einer Doppelsamt-Einbindung vergleichbares Gewirke vor.

Die Anzahl der Stützfäden ergibt sich aus der Wirkdichte. Durch Verändern der Stegfadenzahl können mehrfach höhere oder auch niedrigere Zwischenstege 4 als dargestellt erzeugt werden.

Die Gewirkestruktur schafft für die im wesentlichen quer zu den parallelen Lagen 2, 3 ausgerichteten Zwischenstege 4 ein hochelastisches, relativ beweglichliches Einbindungsbett, d.h., die Stegabschnitte können im Falle der Verformung des noch nicht harzimprägnierten Texilteils Ausgleichslängen aus dem schlingenreichen Einbindungshintergrund übernehmen oder aber in den Gewirkehintergrund eingeschoben werden. Diese Beweglichkeit bezieht sich natürlich auf ein Teilmaß der Länge, so daß im Grunde die angestrebte Parallelität der Lagen im Falle einer bspw. sphärischen Ausformung im Grunde beibehalten wird. Das Gewirke rückt in der inneren Krümmungsfläche bzw. -lage mehr ineinander, wobei sich die äußere Krümmungsfläche bzw. -lage aus dem gegebenen Schlingenvorrat streckt.

Verarbeitet werden technische Garne wie Aramidfaser, Kohlefaser, Keramikfaser oder insbesondere Glasfaser oder Mischformen.

Zufolge der solchen Hochleistungsfasern innewohnende Rückstellkraft und auch bedingt durch die Verbindungsstruktur haben die die Zwischenstege 4 bildenden Stützfäden das Bestreben, sich aufzurichten d.h. in belastungsfreiem Zustand sich zurückzustellen. Das führt zu einer parallelen Beabstandung der Lagen 2, 3. Der lichte Abstand x zwischen den beiden Lagen 2, 3 entspricht einem Vielfachen der Lagendicke.

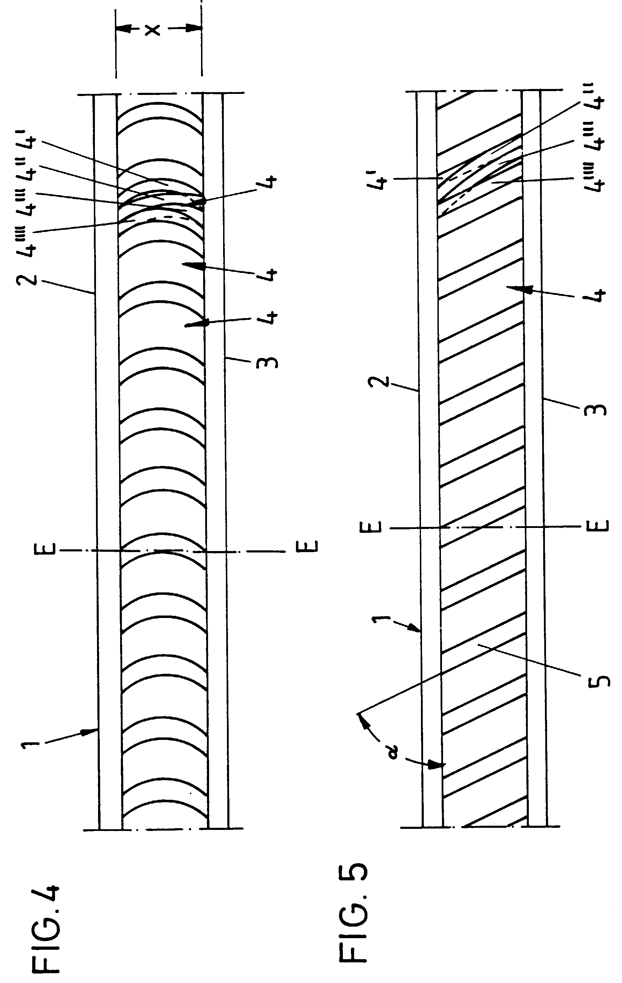

Die Zwischenstege 4 werden nun, wie auch der ganze restliche Bauteilkörper, durch aushärtendes Harz versteift, so daß die Zwischenstege 4 zwischen der ersten Lage 2 und der zweiten Lage 3 dann praktisch starre Beabstandungselemente bilden. Überschüssiger Harzanteil wird ausgequetscht. Das spontane Zurückstellen der Zwischenstege 4 in ihre aus den Figuren 4 und 5 ersichtlichen Endstellung geschieht selbst nach dem völligen Zusammendrücken der Gewirkestruktur. Entsprechend entstehen beim Wirken zufolge der notwendigen Umlenkungen und Schlingungen keinerlei Beschädigungen, welche Tatsache sich bei der Herstellung solcher Bauteile vorteilhaft nutzen läßt.

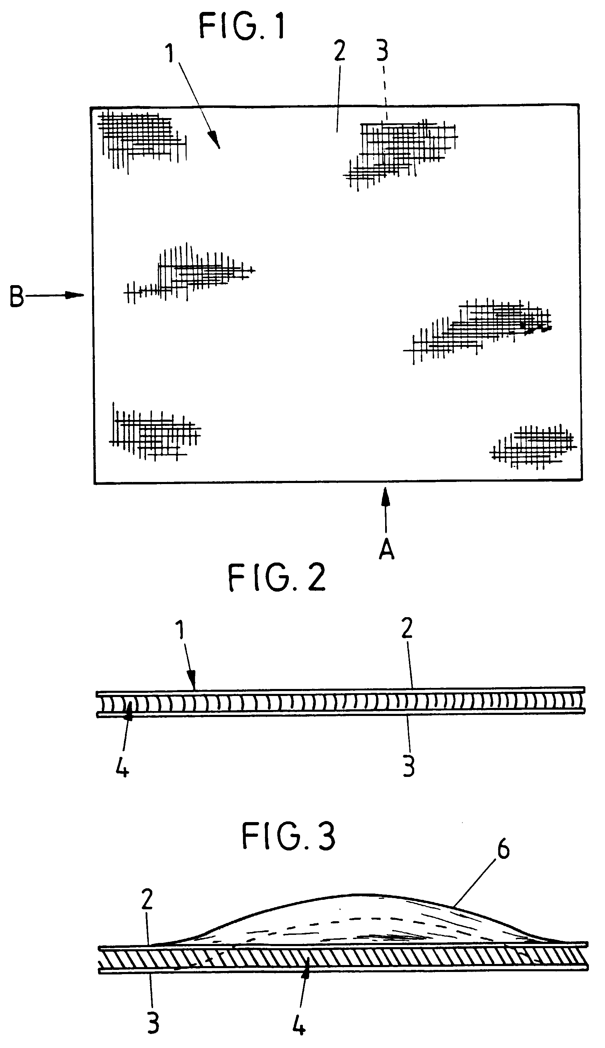

Wie den genannten Figuren weiter entnehmbar, ist die "mittlere Länge" der Zwischenstege 4 größer als der lichte Abstand x zwischen den Lagen 2 und 3. Die sie (4) bildenden freien Stützfadenabschnitte wechseln also nicht auf kürzestem Wege zwischen den beiden benachbarten parallelen Lagen 2, 3. Es ergibt sich vielmehr, wie aus den genannten Figuren erkennbar, eine leichte Neigungslage, gesehen aus der Betrachtungsrichtung B in Figur 1. Deutlicher geht dieser Sachverhalt noch aus der schematischen Darstellung gemäß Figur 5 hervor. Bezüglich aller Zwischenstege 4 ist eine gleichgerichtete Schrägung angewandt, so daß von einem eingeregelten Schrägungsverlauf gesprochen werden kann. Der diesbezügliche Schrägungswinkel Alpha beträgt ca. 60°, bezogen auf die Erstreckungsebene des Bauteils. Die Zwischenstege 4 erstrecken sich in Reihe und Glied hintereinander, so daß unverstellte Durchblickfugen 5 in Pfeilrichtung B verbleiben.

Aus Pfeilrichtung A betrachtet, ergibt sich das aus Figur 4 ersichtliche Wirkprofil, d.h., die Zwischenstege 4 nehmen einen fortlaufend gleichsinnig gekrümmten Verlauf. Die wahre Länge ist also auch in dieser Richtung größer als x.

Der Begriff "mittlere Länge" ist gewählt, weil die Zwischenstege 4 jeweils aus einer Schar gekrümmter, schräg gestellter Einzelstege 4′ - 4˝˝ bestehen. Schrägung und Krümmung sind gleichsinnig. Krümmung plus Schrägstellung führen in gedachter Verlängerung praktisch zu einem wendelförmigen Verlauf der Einzelstege 4′ - 4˝˝ der Zwischenstege 4. Die Einzelstege passieren den Freiraum zwischen den Lagen 2, 3 untereinander im wesentlichen berührungsfrei. Entsprechend wirken sie auch als einzelstehende Federelemente. Um ein Ausbauschen zu vermeiden, sind die aus Filamenten bestehenden Garne schwach gedrillt.

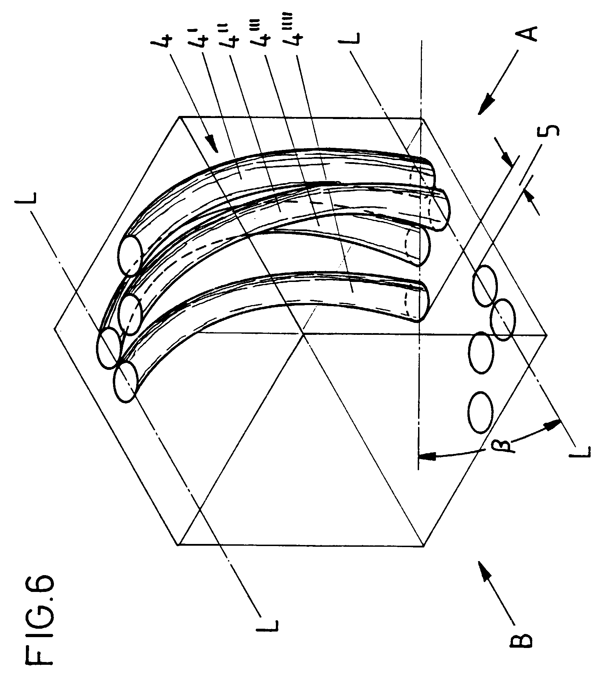

Die lagenseitigen Austrittbereiche sind schräg zu den Betrachtungsrichtungen A, B orientiert. Der Schrägungswinkel ist mit Beta bezeichnet und beträgt ca. 45° zur in Figur 6 eingetragenen Orientierungslinie L. Die räumliche Verteilung der Austrittsbereiche oben zu unten läßt sich dort aufgrund einer Orientierungshilfe in Form eines Würfels gut ausmachen. Danach liegen unten rechts die Einzelstege 4′ und 4˝ im wesentlichen in der Linie L, der Einzelsteg 4‴ wurzelt etwa rechtwinklig dazu liegend in seitlicher Nachbarschaft des Einzelsteges 4˝. Demgegenüber ist der in weiterem Abstand zu den Einzelstegen 4′ - 4‴ liegende Einzelsteg 4˝˝ etwa im Schnittpunkt der Diametralen der Würfelbodenfläche angeordnet. Unter Schrägausrichtung im Winkel Alpha münden die oberen Enden der Einzelstege in der Decke des Würfels, jedoch in der anderen Würfelhälfte. Auf die dortige Linie L-L bezogen liegen nun die Einzelstege 4‴ und 4˝˝ in Erstreckungsrichtung der besagten Linie, der Einzelsteg 4˝ liegt neben dem Einzelsteg 4‴, und zwar würfeleinwärts versetzt, wobei der Einzelsteg 4′ in der Würfelmittelebene in die Lagendecke einläuft.

Der entgegen Betrachtungsrichtung B sich fortsetztende Wurzelbereich des nächstfolgenden Zwischensteges ist nur angedeutet. Die Linien L verlaufen parallel zur Seitenkante des rechteckigen Produkt-Zuschnitts.

Die sockelartigen Übergangsbereiche der Zwischenstege 4 sind, bezogen auf eine vertikale Bezugsebene E-E so gelegt, daß benachbarte Ansatzzonen einander überlappen (vgl. Figur 5). Eine im entsprechenden Sinne angelegte Ebene E-E in Figur 4 aus Betrachtungsrichtung A zeigt, daß dort keine Überlappung vorliegt. Vielmehr liegen die auslaufenden Punkte der einen Seite des Einzelzwischenstegen 4 in der dortigen gemeinsamen Ebene E-E, die aber den gewölbten Rücken des nach links hin nächtsfolgenden Zwischensteges 4 tangiert.

Die lagenseitigen Austrittsbereiche der Einzelstege 4′ - 4˝˝ können sockelartige Materialanhäufungen an Kunstharz aufweisen, etwa den überirdischen Wurzelansätzen von Bäumen vergleichbare Stümpfe formen (nicht dargestellt). Das führt zu einem praktisch kegelstumpfartigen Übergang zwischen der Innenseite der Lagen 2, 3 und den Beabstandungselementen. Die Kegelstumpfbasis entspricht dann dem Mehrfachen des Querschnitts eines Einzelsteges 4′ bzw. 4˝ bzw. 4‴ bzw. 4˝˝. Trotz des weit beabstandeten Freistandes der Zwischenstege 4 zueinander und der Einzelstege untereinander ergibt sich stets ein hochfester, säulenartiger, dennoch eine gewisse Flexibilität auch in Erstreckungsrichtung der Einzelstege 4 aufweisender Distanzkörper.

Partielle Belastungen an den Breitflächen des Bauteiles 1 bringen auch die im weiteren Umfeld liegenden Zwischenstege in Beteilung, da zufolge der leichten, überdies auch noch gleichgerichteten Neigungslage eine gegenläufige Verschiebebewegung der Lagen 2, 3 auf kommt. Neben dieser guten Lastverteilung wirkt sich auch noch die beschriebene Gestalt der Zwischenstege 4 kräfteverzehrend aus.

Getränkt ist die erläutere Gewirkestruktur mit markterhältlichem Harz plus Härter. Die überschüssige Harzmenge wird abgequetscht oder ausgerollt, so daß die innere Struktur bis auf die benetzten, stegbildenden Stützfäden und die beiden getränkten Gewebelagen harzfrei ist. Die entsprechenden Evakuierung an Harz zur Bildung eines großen Höhlungsanteils geschieht in einem Umfang, daß die Rückstellkraft der Zwischenstege 4 freigegeben wird bis diese, wie schon angedeutet, ihre Grund- oder Endstellung erreichen. Sehr gut kann auch im Vakuumverfahren gearbeitet werden, wobei bis über den Beginn der Harzreaktion das Vakuum anliegen kann und erst kurz vor dem endgültigen Aushärten weggenommen wird. Die bis dahin fest zusammengepreßte Struktur richtet sich dann auf der freien Seite wieder auf. Bei z. B. zwei Lagen und entsprechend exakter und gleichmäßiger Aufbringung des Harzes ist es nicht notwendig, den überschüssigen Harzgehalt durch Ausquetschen bzw. Ausrollen zu entfernen. Nach dem Trockenprozess ergeben sich ausgehärtete Bauteile in hoher Steifigkeit und Druckfestigkeit. Durch entsprechende Legung wie z. B. Franse, Trikot, Atlas oder Tuch kann die Verformbarkeit geregelt werden, sogar bis zur Möglichkeit des Tiefziehens. Die entsprechend gute Formbarkeit des Abstandsgewirkes erleichtert daher die Herstellung sphärischer Partien ganz erheblich. Eine solche sphärische Partie ist in Figur 3 dargestellt und mit 6 bezeichnet. Es lassen sich auch andere Ausformungen als dargestellt realisieren.

Der verwirklichte sandwichartige Ausbau wirkt zufolge einer einzigen zusammenhängenden Struktur jeder Delaminierungstendenz, etwa im Sinne eines Ablösens einer Lage, entgegen.

## Patentansprüche

1. Bauteil auf Gewirkebasis, und zwar auf Basis eines Abstandsgewirkes aus einem technischen Garn wie Aramidfaser, Kohlefaser, Keramikfaser oder insbesondere Glasfaser, mit mindestens einer ersten (2) und einer zweiten Lage (3) und diese Lagen verbindenden Zwischenstegen (4), welche aus frei flottierenden Fadenbrücken bestehen, dadurch gekennzeichnet, daß das Abstandsgewirke ausgehärtet verharzt ist, wobei die Zwischenstege (4) starre Beabstandungselemente der ersten Lage (2) und zweiten Lage (3) bilden, daß weiter die mittlere Länge der Zwischenstege (4) größer ist als der Abstand (x) zwischen den Lagen (2,3) derart, daß die Zwischenstege (4) eingeregelt geschrägt verlaufen, wobei die engeregelte Schrägung durch eine leichte Krümmung überlagert ist.

2. Bauteil nach Anspruch 1, dadurch gekennzeichnet, daß der Zwischensteg (4) fortlaufend gleichsinnig gekrümmt ist.

3. Bauteil nach einem oder mehreren der vorhergehenden Ansprüche, dadurch gekennzeichnet, daß die Zwischenstege (4) über sockelartige Übergangsbereiche in Innenseiten der Lagen (2,3) übergehen und daß die sockelartigen Übergangsbereiche vertikal (Ebene E-E) versetzt zueinander angeordnet sind.

4. Bauteil nach einem oder mehreren der vorhergehenden Ansprüche, dadurch gekennzeichnet, daß ein Zwischensteg (4) aus schwach gedrillten Einzelstegen (4'- 4''''') besteht.

5. Verfahren zur Herstellung eines Bauteils, nach einem oder mehreren der Ansprüche 1 bis 4, durch Verharzen und nachfolgendes Aushärten eines Gewirke, wobei nach dem Verharzen des Gewirkes eine Teilentfernung vorgenommen wird zur Ausbringung überschüssigen Harzes, dadurch gekennzeichnet, daß unter Verwendung eines Abstandsgewirkes, welches Zwischenstege (4) als starre Beabstandungselemente zwischen der ersten und er zweiten Lage (2 und 3) bildet, das Entfernen von Harz in einem solchen Umfang erfolgt, daß die Rückstellkraft von Zwischenstegen (4) freigegeben wird, so daß diese sich in eine eingeregelt schräge, die Schrägung überlagernde Krümmung aufrichten.

## Claims

1. Structural component on the basis of woven material, in fact on the basis of a spaced woven material made of a technical yarn such as aramide fibre, carbon fibre, ceramic fibre or especially glass fibre, with at least a first (2) and a second layer (3) and connecting these layers intervening webs (4), which consist of freely floating thread bridges, characterised in that the spaced woven material is resinified and hardened, wherein the intervening webs (4) form rigid spacing elements of the first layer (2) and the second layer (3), that further the mean length of the intervening webs (4) is greater than the distance (x) between the layers (2, 3) such that the intervening bridges (4) extend in a regulated chamfered manner, wherein the regulated chamfering is overlaid by a slight curvature.

2. Structural component according to claim 1, characterised in that the intervening web (4) is continuously curved in the same direction.

3. Structural component according to one or several of the preceding claims, characterised in that the intervening webs (4) pass over through pedestal-like transition regions in the insides of the layers (2, 3) and that the pedestal-like transition regions are arranged vertically (plane E-E) displaced to one another.

4. Structural component according to one or several of the preceding claims, characterised in that an intervening web (4) consists of lightly twisted individual webs (4'-4''''').

5. Method for manufacturing a structural component according to one or several of the claims 1 to 4, by resinification and subsequent hardening of a woven material, wherein after resinification of the woven material a partial removal is undertaken for taking away the excess resin, characterised in that with the use of a spaced woven material which forms intervening webs (4) as rigid spacing elements between the first and the second layer (2 and 3), the removal of resin occurs to such an extent that the restoring force of the intervening webs (4) is released so that the latter are raised up into a controlled chamfered curve which is overlaid on the chamfering.

## Revendications

1. Composant réalisé par tricotage, en particulier sur la base d'un tissu à mailles à couches espacées, en une fibre technique comme de la fibre d'aramide, de la fibre de carbone, de la fibre de céramique ou notamment de la fibre de verre, avec au moins une première et une seconde couches (2, 3) et, reliant ces couches, des entretoises (4) qui consistent en des ponts de fibres flottant librement, caractérisé en ce que ce tissu à couches espacées est résinifié et durci, tandis que les entretoises (4) forment des éléments rigides d'espacement de la première couche (2) et de la seconde couche (3), en ce qu'en outre la longueur moyenne des entretoises (4) est supérieure à la distance (x) entre les couches (2, 3), de telle sorte que les entretoises (4) soient disposées régulièrement selon un trajet oblique, une légère courbure s'ajoutant à cette disposition oblique régulière.

2. Composant selon la revendication 1, caractérisé en ce que l'entretoise (4) est continuellement courbée dans le même sens.

3. Composant selon l'une ou plusieurs des revendications précédentes, caractérisé en ce que les entretoises (4) pénètrent dans les faces intérieures des couches (2, 3) par des zones de transition en forme de socle, et en ce que ces zones de transition en forme de socle (plan E-E) sont verticalement décalées l'une par rapport à l'autre.

4. Composant selon l'une ou plusieurs des revendications précédentes, caractérisé en ce qu'une entretoise (4) est constituée de barrettes individuelles (4' à 4"') légèrement vrillées.

5. Procédé pour la fabrication d'un composant selon l'une ou plusieurs des revendications 1 à 4, par résinification et durcissement ultérieur d'un tissu à mailles, une élimination partielle étant effectuée après durcissement du tissu à mailles pour enlever la résine excédentaire, caractérisé en ce que dans l'utilisation d'un tissu à mailles à couches espacées qui forme des entretoises (4) en tant qu'éléments d'espacement rigides entre la première et la seconde couches (2, 3), l'élimination de la résine est réalisée dans une mesure telle que la force de rappel des entretoises (4) soit libérée pour que ces dernières s'orientent régulièrement en oblique, avec une courbure s'ajoutant à cette obliquité.
